# EUROPÄISCHE PATENTSCHRIFT

(11) **EP 0 860 106 B1**
(45) Veröffentlichungstag und Bekanntmachung des Hinweises auf die Patenterteilung: **02.01.2002**
(21) Anmeldenummer: 98100202.5
(22) Anmeldetag: 08.01.1998
(51) Int. Cl.: A01D 45/02, A01F 29/14

(54) **Maschine zum reihenunabhängigen Mähen von Mais und dgl. stengelartigem Erntegut**
Machine for mowing maize and suchlike stalk crops
Machine pour faucher du mais et des plantes à tiges similaires

(30) Priorität: 19.02.1997 DE 29702902 U
(43) Veröffentlichungstag der Anmeldung: 26.08.1998
(73) Patentinhaber: Maschinenfabrik Kemper GmbH & Co. KG, 48703 Stadtlohn (DE)
(72) Erfinder: Wübbels, Richard, 46414 Rhede (DE); Wolters, Norbert, 48712 Gescher (DE)
(74) Vertreter: Holst, Sönke, Dr.

(56) Entgegenhaltungen:
- EP-A- 0 567 851
- EP-A- 0 760 200
- DE-U- 29 613 397
- US-A- 3 918 240
- US-A- 4 496 105
- PATENT ABSTRACTS OF JAPAN vol. 007, no. 193 (M-238), 24.August 1983 & JP 58 094637 A (KUBOTA TEKKO KK), 4.Juni 1983,

## Beschreibung

Die Erfindung betrifft eine Maschine zum reihenunabhängigen Mähen von Mais und dgl. stengelartigem Erntegut nach dem Oberbegriff des Anspruchs 1.

Bei solchen Maschinen (wie z.B. aus DE-U-296 133 97 bekannt) werden durch die Einzugs- und Mähtrommeln die Stengel des Ernteguts in aufrechter Stellung eingezogen und gemäht und anschließend dem Häcksler über die ihm vorgeschalteten Einschubwalzen zugeführt. Sämtliche Einzugs- und Mähtrommeln werden hierbei von einer Antriebseinrichtung angetrieben, die an das Zentralgetriebe des in der Regel als Selbstfahrer ausgebildeten Häckslers anschließbar ist. Im Zuge der Rationalisierung des Erntebetriebs werden große selbstfahrende Feldhäcksler mit Leistungen von bis zu 500 PS eingesetzt, wobei entsprechend hohe Antriebsleistungen auf die Einzugs- und Mähtrommeln aufzubringen sind, von denen zwei, drei oder mehr auf beiden Seiten der vertikalen Längsmittelebene der Maschine angeordnet sein können.

Der Antrieb dieser kombinierten Einzugs- und Mähtrommeln beim Anfahren der Maschine für den Erntebetrieb gestaltet sich dadurch schwierig, daß die in Drehbewegung zu versetzenden Massen sehr hoch sind. Dadurch wird beim Anfahren ein hohes Drehmoment benötigt, um die Einzugs- und Mähtrommeln der Maschine in Drehbewegung mit der benötigten Arbeitsgeschwindigkeit zu versetzen. Auch eine Ausbildung der Antriebseinrichtung mit zwei jeweils eine Gruppe von Einzugs- und Mähtrommeln antreibenden einzelnen Wellensträngen beidseits der vertikalen Längsmittelebene der Maschine führt dabei hinsichtlich des Anfahrverhaltens der Einzugs- und Mähtrommeln grundsätzlich nicht zu günstigeren Bedingungen, wenn über das Zentralgetriebe des Häckslers gleichzeitig die hohen Anfahrdrehmomente auf sämtliche Einzugs- und Mähtrommeln der Maschine zu übertragen sind.

Der Erfindung liegt die Aufgabe zugrunde, die Anfahrbedingungen für den Erntebetrieb bei Maschinen der angegebenen Art zu verbessern.

Diese Aufgabe wird nach der Erfindung durch eine Ausgestaltung der Maschine entsprechend dem Anspruch 1 gelöst. .Durch das Aktivieren der Einrichtung zum zeitversetzten Einleiten der Drehbewegung der beiden Wellenstränge beim Anfahren der Maschine für den Erntebetrieb ist es möglich, über die die Verbindung zum Zentralgetriebe des Häckslers herstellende und die beiden Wellenstränge überbrückende Verbindungswelle zunächst nur einen der beiden Wellenstränge, und damit nur eine der beiden Gruppen von Einzugs- und Mähtrommeln zu beiden Seiten der vertikalen Längsmittelebene der Maschine anzufahren. Dies bedeutet bei der spiegelsymmetrischen Anordnung der Einzugs- und Mähtrommeln beidseits der vertikalen Längsmittelebene eine Halbierung des Anfahrdrehmoments, das von der Verbindungswelle auf den zugeschalteten Wellenstrang zu übertragen ist, um den Einzugs- und Mähtrommeln ihre Umlaufbewegung für den Mähbetrieb zu vermitteln. Nach einem wählbaren, sich nach Sekunden bemessenden Zeitraum nach dem Anfahren der einen Maschinenhälfte kann dann die andere Maschinenhälfte durch Einsetzen der Übertragung der Drehbewegung der laufenden Verbindungswelle auf den anderen Wellenstrang angefahren werden, was wiederum nur in den Antrieb schonender Weise mit einem halbierten Anfahrdrehmoment im Vergleich zu der gleichzeitigen Inbetriebnahme beider Maschinenhälften verbunden ist.

Grundsätzlich können zur weiteren Reduzierung der Anfahrdrehmomente im Erntebetrieb die beiden einzelnen Wellenstränge selbst noch ein- oder mehrmals unterteilt sein und über die Verbindungswelle, durch die entsprechende Ausbildung der Einrichtung zum zeitversetzten Einleiten der Drehbewegung, nacheinander mit wählbarem zeitlichem Abstand, ggf. wechselweise auf beiden Maschinenhälften, angefahren werden.

In weiterer Ausgestaltung der Erfindung umfaßt die Einrichtung zum zeitversetzten Einleiten der Drehbewegung der beiden Wellenstränge eine in die Verbindungswelle eingesetzte Schaltkupplung, vorzugsweise eine kraftschlüssige Schaltkupplung, die einem von zwei.Transmissionsgetrieben zugeordnet ist, über die die Verbindungswelle mit den einzelnen Wellensträngen zur Übertragung ihrer Drehbewegung auf diese verbunden ist.

Als kraftschlüssige Schaltkupplung, wie sie in Verbindung mit dem zeitversetzten Anfahren der beiden Maschinenhälften bevorzugt wird, kommen alle geeigneten Reibungskupplungen in Betracht, die während des Betriebs schaltbar sind, d.h. in Kupplungseingriff gebracht werden können, wenn eine der beiden Wellen, im vorliegenden Fall die Verbindungswelle, umläuft und sich die andere Welle, im vorliegenden Fall der zuzuschaltende Wellenstrang einer Maschinenhälfte bzw. das ihm zugeordnete Transmissionsgetriebe, im Stillstand befindet. In diesem Zusammenhang sind insbesondere Scheiben- und Kegelkupplungen zu nennen. Grundsätzlich sind jedoch auch formschlüssige Schaltkupplungen, z.B. Zahnkupplungen, geeignet, sofern sie mit einer Synchronisiereinrichtung zur Erzielung von Gleichlauf zwischen den zu kuppelnden Teilen versehen sind. In gleicher Weise sind auch elektrische Kupplungen oder hydrodynamische Kupplungen für den angegebenen Verwendungszweck geeignet.

Eine besonders bevorzugte Ausgestaltung der Erfindung sieht vor, daß die Verbindungswelle mit zwei jeweils einem der beiden Transmissionsgetriebe zugeordneten Anfahrkupplungen ausgerüstet und die Schaltkupplung mit einer der beiden Anfahrkupplungen zur Drehmomentübertragung kuppelbar und aus dem Kupplungseingriff lösbar ist. Diese Anfahr- oder Anlaufkupplungen sind in allen geeigneten Ausführungsformen auf der Grundlage von Reibungskupplungen mit entsprechender Drehzahlschaltung verwendbar, um erst nach Erreichen einer vorgegebenen Drehzahl den Schaltvorgang zur Vermeidung eines hohen Anlaufmomentes einzuleiten. Diese Anfahrkupplungen können zugleich als Rutsch- oder Sicherheitskupplung durch entsprechende Einstellung der die Reibung erzeugenden Bauelemente ausgebildet sein.

Die mit der Einrichtung zum zeitversetzten Anfahren der beiden Maschinenhälften Verwendung findende Schaltkupplung ist zweckmäßig mit einem in eine elektronische Steuereinrichtung einbezogenen Stellglied für ihren Kupplungseingriff mit dem zugehörigen Transmissionsgetriebe bzw. der zugehörigen Anfahrkupplung versehen. Ein solches Stellglied als Betätigungsmittel für die Schaltkupplung kann beispielsweise von einem hydraulischen Arbeitszylinder gebildet sein, der mit der Bordhydraulik des Feldhäckslers bzw. Fahrzeugs verbunden ist und dessen Kolbenstange mit dem ein- und ausrückbaren Teil der Schaltkupplung in Wirkverbindung steht. Grundsätzlich können jedoch auch andere geeignete Elemente, z.B. Elektromagnete oder Druckluftmotoren, als Stellglied Verwendung finden, soweit sie für einen Einsatz in Verbindung mit Erntemaschinen der hier in Rede stehenden Art zweckmäßig und geeignet sind.

Die Steuereinrichtung umfaßt ferner einen Bewegungssensor oder Drehzahlwächter, der beim Anfahren der Maschine für den Erntebetrieb ein die Drehbewegung der Verbindungswelle meldendes Signal an die Steuereinrichtung abgibt, um das Stellglied der Schaltkupplung zeitverzögert zu betätigen. Hierzu kann die Steuereinrichtung zweckmäßig ein einstellbares Zeitglied umfassen. Beim Abschalten der Maschine gibt der Bewegungssensor ein den Stillstand der Verbindungswelle anzeigendes Negativsignal an die Steuereinrichtung ab, mit der Folge, daß der Kupplungseingriff der Schaltkupplung mit dem zugehörigen Transmissionsgetriebe bzw. der zugehörigen Anfahrkupplung durch entsprechende Rückführung des Stellgliedes gelöst wird.

Ein solches Abschalten der Maschine ergibt sich bei einer Verstopfung im Einzugsbereich des Häckslers, die dessen Einschubwalzen blockiert. Vom Feldhäcksler bzw. Fahrzeug aus wird dann manuell auf Reversierbetrieb geschaltet, wobei die Einschubwalzen des Häckslers entgegen der Einzugsdrehrichtung, also rückwärts, umlaufen. Entsprechend müssen auch die Einzugs- bzw. Fördertrommeln beider Maschinenhälften in entgegengesetzter Richtung wie im Erntebetrieb, also ebenfalls rückwärts, umlaufen, um den gestauten Erntegutstrom gemeinsam von den Einschubwalzen des Häckslers zurückzubewegen.

Diese Betriebsweise wird nach einem weiteren Merkmal der Erfindung dadurch ermöglicht, daß die Antriebseinrichtung mit einer drehrichtungsgeschalteten Kupplung für ein gleichzeitiges Einleiten der Rückwärtsdrehbewegung der beiden Wellenstränge im Reversierbetrieb der Maschine ausgerüstet ist. Die dem Reversierbetrieb entsprechend drehrichtungsgeschaltete Kupplung bildet als Freilaufkupplung bei ausgerückter Schaltkupplung eine direkte Antriebsverbindung von der Verbindungswelle zu dem der Schaltkupplung zugeordnete Transmissionsgetriebe, während bei der Drehbewegung der Verbindungswelle in der anderen, der Vorwärtsrichtung für den Erntebetrieb, kein Drehmoment von der Freilaufkupplung übertragen wird. Als drehrichtungsgeschaltete Kupplungen können in diesem Zusammenhang alle geeigneten Überhol- und Freilaufkupplungen Anwendung finden, z.B. sog. Klemmrollenfreiläufe, bei denen sich der Kupplungsaußenring gegenüber dem Innenring durch eingelegte Klemmelemente in der einen, dem Reversierbetrieb entsprechenden Richtung verspannt, während sich beide Ringe in der entgegengesetzten, dem Erntebetrieb entsprechenden Drehrichtung relativ zueinander drehen können.

Nach dem Herausbewegen des Materialstaus aus den Einschubwalzen durch den Reversierbetrieb erfolgt ein erneutes Anfahren der Maschine in der eingangs erläuterten Weise mit einer Zeitdifferenz zwischen dem Anlaufen der ersten Maschinenhälfte und der zweiten Maschinenhälfte. Neben der bereits erläuterten Reduzierung der Anfahrdrehmomente hat dies für die Staubeseitigung den besonderen Vorteil, daß durch die zuerst angefahrene Maschinenhälfte nur die eine Hälfte des zurückgeförderten Staugutstroms in die Einschubwalzen des Häckslers eingespeist wird, so daß diese den in etwa auf die Hälfte verminderten Erntegutstrom mühelos aufnehmen können, ebenso wie die anschließend beim Anfahren der zweiten Maschinenhälfte zugeförderte zweite Hälfte des Staugutstroms.

Weitere Merkmale und Vorteile der Erfindung ergeben sich aus den Ansprüchen und der nachstehenden Beschreibung in Verbindung mit der Zeichnung, in der ein Ausführungsbeispiel der Erfindung schematisch veranschaulicht ist. In der Zeichnung zeigt:
Fig. 1 eine Draufsicht auf eine Maschine zum reihenunabhängigen Mähen von Mais und dgl. stengelartigem Erntegut in Verbindung mit einem Häcksler,
Fig. 2 eine Draufsicht auf den vorderen, mittleren Bereich der Mähmaschine nach Fig. 1 in gegenüber dieser vergrößertem Maßstab,
Fig. 3 eine Draufsicht auf den vorderen, mittleren Teil der Maschine nach Fig. 1 zur Veranschaulichung des Reversierbetriebs zur Staubeseitigung und
Fig. 4 eine Darstellung entsprechend Fig. 3 zur Veranschaulichung eines anderen Momentanzustands bei der Staubeseitigung.

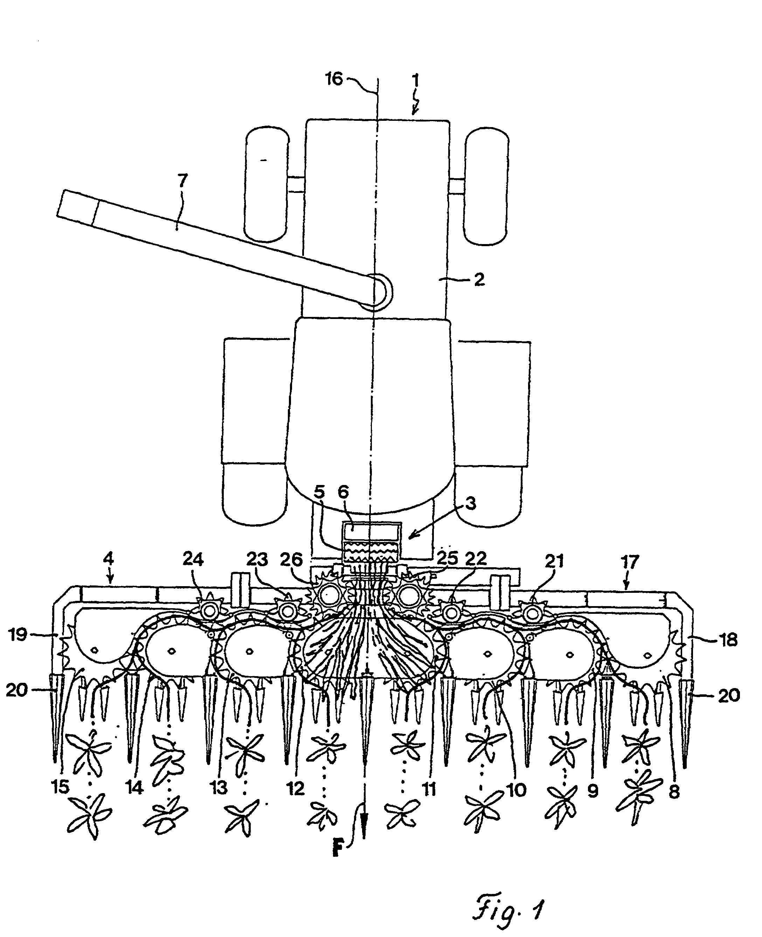

In Fig. 1 ist ein als Ganzes mit 1 bezeichneter Feldhäcksler dargestellt, der ein selbstfahrendes Fahrzeug 2 mit einem Häcksler 3 und eine als Ganzes mit 4 bezeichnete Maschine zum reihenunabhängigen Mähen von Mais und dgl. stengelartigem Erntegut als Mähvorsatz in Form eines Anbaugerätes für das nach Art eines Schleppers ausgebildete Fahrzeug 2 umfaßt. Der Häcksler 3 ist in bezug auf die Mähmaschine 4 mittig angeordnet und besitzt ein Paar vorderer Einschubwalzen 5 und ein Paar hinterer Einschubwalzen 6, zwischen denen das gemähte Erntegut dem nicht näher dargestellten Häckselgebläse zugeführt wird, in dem es zerkleinert und über ein Ausblasrohr 7 z.B. auf einen landwirtschaftlichen Ladewagen gefördert wird.

Die gemäß Fig. 1 vom Fahrzeug 2 in Arbeits- bzw. Fahrtrichtung gemäß dem Pfeil F vorbewegte Mähmaschine 4 umfaßt bei dem dargestellten Beispiel insgesamt acht Einzugs- und Mähtrommeln 8 bis 15, von denen die Einzugs- und Mähtrommeln 8 bis 11 als Gruppe auf der einen, der in Fahrtrichtung linken, Seite und die Einzugs- und Mähtrommeln 12 bis 15 als Gruppe auf der anderen, der in Fahrtrichtung rechten, Seite einer vertikalen Längsmittelebene 16 der Maschine 4 angeordnet sind. Zu dieser Längsmittelebene 16 besitzen die beiden Gruppen von Einzugs- und Mähtrommeln 8 bis 11 einerseits und 12 bis 15 andererseits eine spiegelsymmetrische Anordnung.

Die Einzugs- und Mähtrommeln 8 bis 15 sind von einem an der Vorderseite, in Fahrtrichtung F, offenen Maschinenrahmen 17 seitlich und rückseitig umgeben. Der Maschinenrahmen 17 umfaßt seitliche Führungen 18 und 19, die zusammen die Arbeitsbreite der Maschine bestimmen. Die seitlichen Führungen 18 und 19 laufen vorn jeweils in einer Teilerspitze 20 aus, die als Blattheber für das schematisch angedeutete Erntegut wirkt und den Mähschnitt vorbereitet. Innerhalb der Arbeitsbreite der Maschine 4 sind weitere Teilerspitzen von der gleichen Länge wie die Teilerspitzen 20 und zwischen ihnen kürzere Teilerspitzen angeordnet, die in nicht näher dargestellter Weise unterseitig am Maschinenrahmen 17 befestigt sind.

In die beiden Gruppen von Einzugs- und Mähtrommeln 8 bis 15 beidseits der Längsmittelebene 16 sind außerdem weitere Fördertrommeln 21 und 22 bzw. 23 und 24 für geschnittenes Erntegut im häckslernahen Zwickelbereich zwischen benachbarten Einzugs- und Mähtrommeln 9, 10, 11 der einen Trommelgruppe und 12, 13, 14 der anderen Trommelgruppe einbezogen. Ferner umfassen die beiden Trommelgruppen zusätzlich jeweils eine Schrägfördertrommel 25, 26 seitlich vor den Einschubwalzen 5, 6 des Häckslers 3. Die Schrägfördertrommeln 25 und 26 besitzen eine Anordnung und Ausgestaltung zur Übergabe des geschnittenen, von den Einzugs- und Mähtrommeln 8 bis 11 und 12 bis 15 einschl. der Fördertrommeln 21, 22 und 23, 24 von beiden Maschinenseiten her herantransportierten Ernteguts und zu dessen Einspeisung in den horizontalen Einführungsspalt zwischen den Einschubwalzen 5, 6, der höher liegt als die Mähebene der Einzugs- und Mähtrommeln 8 bis 15.

Für eine Drehbewegung der Einzugs- und Mähtrommeln 8 bis 15 sowie der Fördertrommeln 22 bis 24 um im wesentlichen vertikale Drehachsen sowie für die Drehbewegung der Schrägfördertrommeln 25, 26 um Drehachsen, die aus der Vertikalen um etwa 20° zur Horizontalen hin geneigt sind, ist eine an das Zentralgetriebe (nicht dargestellt) des Häckslers 3 anschließbare Antriebseinrichtung für die Mähmaschine 4 vorgesehen, die zwei, jeweils die Gruppe der Einzugs- und Mähtrommeln 8 bis 11 und der Fördertrommeln 21, 22 und die Gruppe der Einzugs- und Mähtrommeln 12 bis 15 und der Fördertrommeln 23, 24 antreibende einzelne Wellenstränge 27, 28 beidseits der vertikalen Längsmittelebene 16 der Mähmaschine 4 umfaßt.

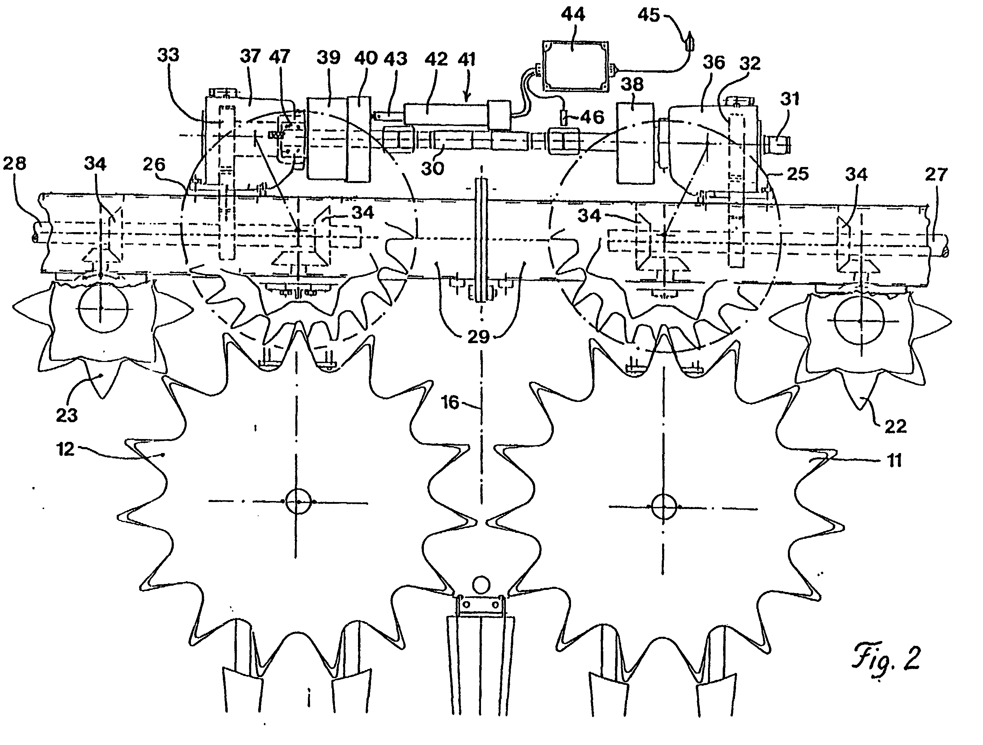

Wie dies insbesondere die maßstäblich vergrößerte Darstellung gemäß Fig. 2 zeigt, sind die beiden Wellenstränge 27, 28 jeweils in einem an der Rückseite des Maschinenrahmens 17 festgelegten Rahmenrohr 29 drehbar abgestützt, das aus zwei entlang der vertikalen Längsmittelebene 16 zusammengeflanschten Rohrhälften besteht. Wie Fig. 2 ferner zeigt, sind die beiden einzelnen Wellenstränge 27 und 28 von einer Verbindungswelle 30 als Teil der Antriebseinrichtung überbrückt. Die Verbindungswelle 30 ist mit einem Anschlußzapfen 31 versehen, mit dem sie in nicht näher dargestellter, an sich bekannter Weise an das Zentralgetriebe des Häckslers 3 zur Drehmomentübertragung anschließbar ist.

Die Verbindungswelle 30 ist über je ein Transmissionsgetriebe 32, 33, jeweils in Form einer Stirnradkette, mit dem Wellenstrang 27 bzw. 28 zur Übertragung ihrer Drehbewegung verbunden. Von den Wellensträngen 27 und 28 wird der Drehantrieb über Kegeltriebe 34 an die Einzugs- und Mähtrommeln 8 bis 15 sowie die Fördertrommeln 21, 22 und 23, 24 weitergeleitet. Für den Drehantrieb der Schrägfördertrommeln 25 und 26, von denen in Fig. 2 lediglich strichpunktiert der Trommelmantel und die Drehachse angedeutet sind, befindet sich endseitig auf der Verbindungswelle 30 je ein Winkelgetriebe 36 bzw. 37.

Die Verbindungswelle 30 ist ferner mit zwei jeweils einem der beiden Transmissionsgetriebe 32, 33 zugeordneten Anfahrkupplungen 38, 39 ausgerüstet, wobei ferner der Anfahrkupplung 39 eine Schaltkupplung 40 zugeordnet ist. Die Schaltkupplung 40 kann mittels eines Stellglieds 41 mit der Schaltkupplung 40 in Kupplungseingriff gebracht und aus diesem Kupplungseingriff gelöst werden. Das Stellglied 41 ist bei dem dargestellten Beispiel ein druckmittelbetätigter Arbeitszylinder 42, dessen Kolbenstange 43 mit der Schaltkupplung 40, die eine kraftschlüssige Ausführung hat, in Wirkverbindung steht.

Das Stellglied 41 wird von einer in die Antriebseinrichtung einbezogenen elektronischen Steuereinrichtung 44 betätigt, die mit einem Anschlußstecker 45 für eine Verbindung mit der Bordelektrik, z.B. einer Gleichstromquelle von 12 Volt, versehen ist. Die Steuereinrichtung 44 umfaßt ferner einen Bewegungssensor 46, der ein Bewegungssignal an die Steuereinrichtung 44 abgibt, wenn der Feldhäcksler für den Erntebetrieb angefahren und die Mähmaschine 4 vom Fahrzeug 2 aus zugeschaltet wird.

Für dieses Anfahren zur Betriebsaufnahme liegt eine Grundstellung der Antriebseinrichtung vor, in der die Anfahrkupplung 39 geöffnet und die Anfahrkupplung 38 geschlossen ist. Dies bedeutet, daß beim Anfahren nur die in Fahrtrichtung linke Trommelgruppe der Mähmaschine 4 mittels der in Drehung versetzten Verbindungswelle 30 eingeschaltet wird. Bei Erhalt des Bewegungssignals vom Bewegungssensor 46 bewirkt die Steuereinrichtung 44 mit einer Zeitverzögerung, die über ein eingebautes Zeitglied herbeigeführt werden kann, die Betätigung des Stellgliedes 41 zur Herstellung des Kupplungseingriffs der Schaltkupplung 40 mit der Anfahrkupplung 39, um diese für die Übertragung der Drehbewegung der Verbindungswelle 30 auf das Transmissionsgetriebe 33 zu schließen. Es läuft sodann mit der entsprechenden Zeitverzögerung die in Fahrtrichtung rechte Trommelgruppe an, in die die von der Verbindungswelle 30 über das Getriebe 37 nach Schließen der Kupplung 39 unmittelbar angetriebene Schrägfördertrommel 26 einbezogen ist, ebenso wie die von der Verbindungswelle 30 beim Anfahren von der Verbindungswelle 30 angetriebene Schrägfördertrommel 25 in die in Fahrtrichtung linke Trommelgruppe des Mähvorsatzes einbezogen ist.

Der Bewegungssensor 46 gibt ferner ein Negativsignal an die Steuereinrichtung 44 ab, wenn die Mähmaschine 4 abgeschaltet wird und die Verbindungswelle 30 zum Stillstand kommt. Hierdurch wird die Schaltkupplung 40 mittels des Stellglieds 41 aus ihrem Kupplungseingriff gelöst und die Grundstellung für das Anfahren wieder hergestellt, in der die Anfahrkupplung 39 geöffnet ist. Ist das Abschalten des Mähvorsatzes 4 durch einen Stau des Erntegutstroms im Bereich der Einschubwalzen 5, 6 des Häckslers 3 veranlaßt, so muß dieser Stau im Reversierbetrieb beseitigt werden, in dem die Einschubwalzen 5, 6 rückwärts laufen und auch ein Rückwärtsdrehen, entgegen der Drehrichtung im Erntebetrieb, der Einzugs- und Mähtrommeln 8 bis 15 sowie sämtlicher Fördertrommeln 21 bis. 26 erfolgt.

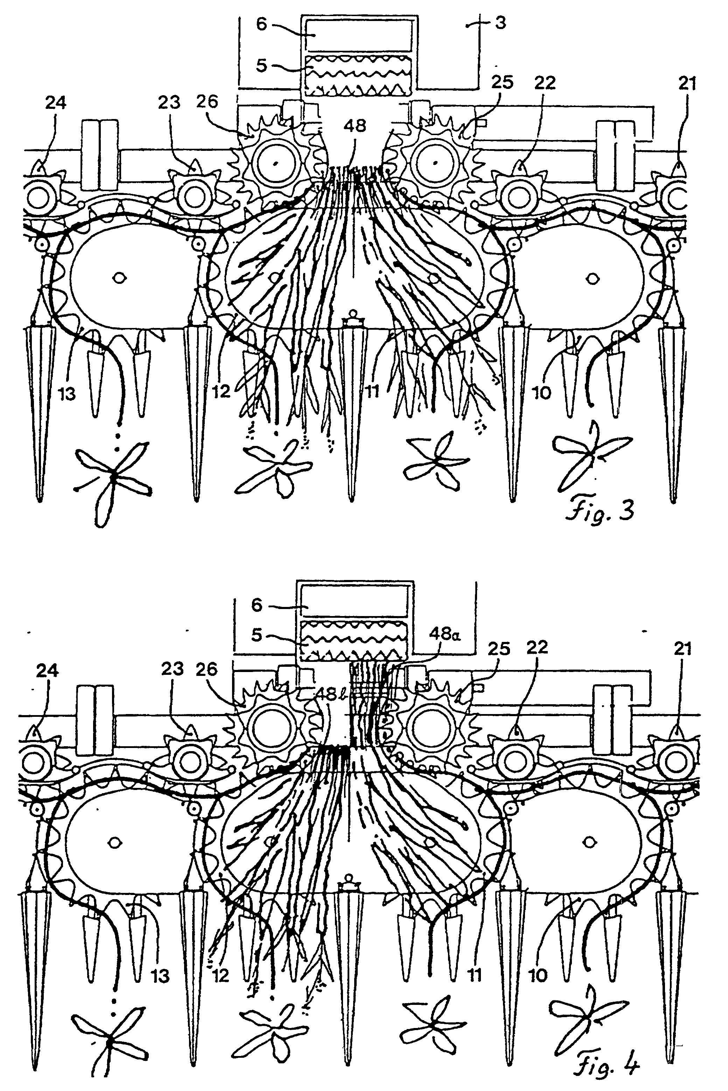

Beim Rückwärtsdrehen erfolgt über die Verbindungswelle 30 der Durchtrieb zur in Fahrtrichtung F rechten Trommelgruppe nicht über die ihre geöffnete Grundstellung einnehmende Anfahrkupplung 39, sondern direkt über eine drehrichtungsgeschaltete Kupplung 47, die beim Rückwärtsdrehen geschlossen ist. Der Erntegutstrom 48, der den Stau im Bereich der Einschubwalzen 5, 6 verursacht hat, wird, wie Fig. 3 veranschaulicht, im Reversierbetrieb mit Hilfe der rückwärtsdrehenden Trommeln, insbesondere zwischen den Schrägfördertrommeln 25 und 26, als Ganzes zurückbewegt. Es entsteht hierdurch ein Freiraum vor den Einschubwalzen 5, 6. Wird sodann die Mähmaschine 4, wie eingangs erläutert, angefahren, so läuft zunächst nur die in Fahrtrichtung F linke Trommelgruppe der Mähmaschine 4 an, und es wird folglich zunächst nur eine Hälfte 48a des Erntegutstroms in die Einschubwalzen 5, 6 eingeführt, wie dies Fig. 4 vernanschaulicht, während die zweite Hälfte 48b des Erntegutstroms mit dem gewählten Zeitversatz, nach dem Anlaufen der in Fahrtrichtung F rechten Trommelgruppe, den Einschubwalzen 5, 6 zugeführt wird. Durch diese Halbierung des Erntegutstroms lassen sich im Erntebetrieb auftretende Staus des Erntegutes unter Vermeidung hoher Anfahrmomente schnell und sicher beseitigen.

## Patentansprüche

1. Maschine zum reihenunabhängigen Mähen von Mais und dgl. stengelartigem Erntegut, mit einer Mehrzahl von Einzugsund Mähtrommeln (8-15), die in spiegelsymmetrischer Anordnung beidseits der vertikalen Längsmittelebene (16) der Maschine (4) einem Häcksler (3) mit Einschubwalzen (5,6) für das geschnittene Erntegut mittig vorzuordnen und für eine Drehbewegung um im wesentlichen vertikale Drehachsen von einer an das Zentralgetriebe des Häckslers (3) anschließbaren Antriebseinrichtung antreibbar sind, die zwei jeweils eine Gruppe von Einzugs- und Mähtrommeln (8-11,12-15) antreibende einzelne Wellenstränge (27,28) beidseits der vertikalen Längsmittelebene der Maschine umfaßt, **dadurch gekennzeichnet, daß** die beiden Wellenstränge (27,28) von einer an das Zentralgetriebe des Häckslers (3) anschließbaren Verbindungswelle (30) überbrückt sind, die eine beim Anfahren der Maschine (4) für den Erntebetrieb aktivierbare Einrichtung zum zeitversetzten Einleiten der Drehbewegung der beiden Wellenstränge (27,28) umfaßt.

2. Maschine nach Anspruch 1, **dadurch gekennzeichnet, daß** die Verbindungswelle (30) über je ein Transmissionsgetriebe (32,33) mit den einzelnen Wellensträngen (27,28) zur Übertragung ihrer Drehbewegung auf diese verbunden ist.

3. Maschine nach Anspruch 1 oder 2, **dadurch gekennzeichnet, daß** die Einrichtung zum zeitversetzten Einleiten der Drehbewegung der beiden Wellenstränge (27,28) eine in die Verbindungswelle (30) eingesetzte Schaltkupplung (40) umfaßt.

4. Maschine nach Anspruch 3, **dadurch gekennzeichnet, daß** die Schaltkupplung (40) von einer kraftschlüssigen Schaltkupplung gebildet ist.

5. Maschine nach Anspruch 3 oder 4, **dadurch gekennzeichnet, daß** die Schaltkupplung (40) einem (33) der beiden Transmissionsgetriebe (32,33) zur Übertragung der Drehbewegung auf den zugehörigen Wellenstrang (28) zugeordnet ist.

6. Maschine nach einem der Ansprüche 3 bis 5, **dadurch gekennzeichnet, daß** die Verbindungswelle (30) mit zwei jeweils einem der beiden Transmissionsgetriebe (32,33) zugeordneten Anfahrkupplungen (38,39) ausgerüstet und die Schaltkupplung (40) mit einer (39) der beiden Anfahrkupplungen (38,39) zur Drehmomentübertragung kuppelbar und aus dem Kupplungseingriff lösbar ist.

7. Maschine nach einem der Ansprüche 3 bis 6, **dadurch gekennzeichnet, daß** die Schaltkupplung (40) mit einem in eine elektronische Steuereinrichtung (44) einbezogenen Stellglied (41) für ihren Kupplungseingriff mit dem zugehörigen Transmissionsgetriebe (33) bzw. der zugehörigen Anfahrkupplung (39) versehen ist.

8. Maschine nach Anspruch 7, **dadurch gekennzeichnet, daß** die Steuereinrichtung (44) einen Bewegungssensor (46) umfaßt, der beim Anfahren der Maschine (4) für den Erntebetrieb ein die Drehbewegung der Verbindungswelle (30) meldendes Signal an die Steuereinrichtung (44) zur Betätigung des Stellglieds (41) abgibt.

9. Maschine nach Anspruch 8, **dadurch gekennzeichnet, daß** die Steuereinrichtung (44) ein Zeitglied zur zeitverzögerten Einleitung der Stellbewegung des Stellglieds (41) nach Erhalt des Drehbewegungssignals umfaßt.

10. Maschine nach Anspruch 8 oder 9, **dadurch gekennzeichnet, daß** der Bewegungssensor (46) beim Abschalten der Maschine (4) ein den Stillstand der Verbindungswelle (30) anzeigendes Negativsignal zum Lösen des Kupplungseingriffs der Schaltkupplung (40) mit dem zugehörigen Transmissionsgetriebe (33) bzw. der zugehörigen Anfahrkupplung (39) an die Steuereinrichtung (44) abgibt.

11. Maschine nach einem der Ansprüche 1 bis 10, **dadurch gekennzeichnet, daß** die Antriebseinrichtung mit einer drehrichtungsgeschalteten Kupplung (47) für ein gleichzeitiges Einleiten der Drehbewegung der beiden Wellenstränge (27,28) im Reversierbetrieb der Maschine (4) ausgerüstet ist.

12. Maschine nach Anspruch 11, **dadurch gekennzeichnet, daß** die dem Reversierbetrieb entsprechend drehrichtungsgeschaltete Kupplung (47) bei ausgerückter Schaltkupplung (40) eine direkte Antriebsverbindung von der Verbindungswelle (30) zu dem der Schaltkupplung (40) zugeordneten Transmissionsgetriebe (33) bildet.

13. Maschine nach einem der Ansprüche 1 bis 12, **dadurch gekennzeichnet, daß** die Gruppen von Einzugs- und Mähtrommeln (8-11;12-15) beidseits der vertikalen Längsmittelebene (16) der Maschine (4) zusätzlich jeweils zumindest eine weitere Fördertrommel (21,22;23,24) für geschnittenes Erntegut im häckslernahen Zwickelbereich zwischen benachbarten Einzugs- und Mähtrommeln (9,10,11;12,13,14) umfassen.

14. Maschine nach einem der Ansprüche 1 bis 13, **dadurch gekennzeichnet, daß** die beiden an die vertikale Längsmittelebene (16) der Maschine (4) angrenzenden Gruppen von Einzugs- und Mähtrommeln (8-11;12-15) zusätzlich jeweils eine Schrägfördertrommel (25,26) seitlich vor den Einschubwalzen (5,6) des Häckslers (3) umfassen.

15. Maschine nach einem der Ansprüche 1 bis 14, **dadurch gekennzeichnet, daß** jeder der beiden Wellenstränge (27,28) seinerseits in zumindest zwei Einzelstränge weiter unterteilt ist und sämtliche Einzelstränge über die Verbindungswelle (30) mittels der Einrichtung zum zeitversetzten Einleiten der Drehbewegung nacheinander mit zeitlichem Abstand anfahrbar sind.

## Claims

1. A machine for row-independent cutting of maize and such stalk-like crops, with a plurality of drawing-in and cutting drums (8-15) which are to be arranged in a mirror image arrangement on the two sides of the vertical longitudinal middle plane (16) of the machine (4), centrally preceding a chopper (3) with insertion rollers (5, 6) for the cut crop and which are drivable for rotary movement about substantially vertical axes of rotation by a drive device which can be coupled to the central transmission of the chopper (3) and which comprises two individual shaftings (27, 28) driving respective groups of drawing-in and cutting drums (8-11, 12-15) on the two sides of the vertical longitudinal middle plane of the machine, **characterized in that** the two shaftings (27, 28) are bridged by a connecting shaft (30) which can be coupled to the central transmission of the chopper (3) and which comprises a device which can be activated for time-shifted introduction of rotary movement of the two shaftings (27, 28) on starting the machine (4) for harvesting operation.

2. A machine according to claim 1, **characterized in that** the connecting shaft (30) is connected through respective transmission gears (32, 33) to the individual shaftings (27, 28) for transmitting its rotary movement to these.

3. A machine according to claim 1 or 2, **characterized in that** the device for time-shifted introduction of rotary movement to the two shaftings (27, 28) comprises a control clutch (40) in the connecting shaft (30).

4. A machine according to claim 3, **characterized in that** the control clutch (40) is formed by a non-positive control clutch.

5. A machine according to claim 3 or 4, **characterized in that** the control clutch (40) is associated with one (33) of the two transmission gears (32, 33) for transmitting the rotary movement to the associated shafting (28).

6. A machine according to any of claims 3 to 5, **characterized in that** the connecting shaft (30) is equipped with two start-up clutches (38, 39) associated with the two transmission gears (32, 33) respectively and the control clutch (40) can be coupled to one (39) of the two start-up clutches (38, 39) for torque transmission and can be released from engagement.

7. A machine according to any of claims 3 to 6, **characterized in that** the control clutch (40) is provided with an actuating member (41) comprised in an electronic control device (44), for its clutch engagement with the associated transmission gear (33) or the associated start-up clutch (39).

8. A machine according to claim 7, **characterized in that** the control device (44) comprises a movement sensor (46) which issues a signal announcing the rotary movement of the connecting shaft (30) when starting the machine (4) for harvesting operation, for operating the actuating member (41).

9. A machine according to claim 8, **characterized in that** the control device (44) comprises a timer for time-delayed introduction of the actuating movement of the actuating member (41) after reception of the rotary movement signal.

10. A machine according to claim 8 or 9, **characterized in that** the movement sensor (46) issues a negative signal to the control device indicating that the connecting shaft (30) has stopped on stopping the machine (4), for releasing the clutch engagement of the control clutch (40) to the associated transmission gear (33) or the associated start-up clutch (39).

11. A machine according to any of claims 1 to 10, **characterized in that** the drive device is equipped with a clutch (47) switching the direction of rotation for simultaneous introduction of the rotary movement to the two shaftings (27, 28) during reverse drive of the machine (4).

12. A machine according to claim 11, **characterized in that** the clutch (47) switching the direction of rotation corresponding to reverse drive makes a direct drive connection from the connecting shaft (30) to the transmission gear (33) associated with the control clutch (40) with the control clutch (40) disengaged.

13. A machine according to any of claims 1 to 12, **characterized in that** the groups of drawing in and cutting drums (8-11; 12-15) on the two sides of the vertical longitudinal middle plane (16) of the machine (4) additionally comprise a further conveyor drum (21, 22; 23, 24) for cut crop in the gusset region near the chopper between adjacent drawing-in and cutting drums (9, 10, 11; 12, 13, 14).

14. A machine according to any of claims 1 to 13, **characterized in that** the two groups of drawing-in and cutting drums (8-11; 12-15) adjoining the vertical longitudinal middle plane (16) of the machine (4) each additionally comprise an inclined conveyor drum (25, 26) at the sides of the insertion rollers (5, 6) of the chopper (3).

15. A machine according to any of claims 1 to 14, **characterized in that** each of the two shaftings (27, 28) is further divided for its part into at least two individual runs and all individual runs can be driven sequentially from the connecting shaft (30) with a time shift by means of the device for time-shifted introduction of the rotary movement.

## Revendications

1. Machine pour faucher du maïs et une matière à récolter analogue du type à tiges, indépendamment de rangées, comportant une multiplicité de tambours d'entrée et de fauchage (8-15), qui doivent être disposés d'une manière centrée devant une hacheuse (3) comportant des cylindres d'insertion (5, 6) pour la matière récoltée, coupée, selon une disposition symétrique des deux côtés du plan médian longitudinal vertical (16) de la machine (4), et peuvent être entraînés pour un mouvement de rotation autour d'axe de rotation essentiellement verticaux par un dispositif d'entraînement pouvant être raccordé à la. transmission centrale de la hacheuse (3) et qui comprend deux trains d'arbres individuels (27, 28), qui entraînent chacun un groupe de tambours d'introduction et de fauchage (8-11, 12-15), des deux côtés du plan médian vertical longitudinal de la machine, **caractérisée en ce que** les deux trains d'arbres (27, 28), sont pontés par un arbre de liaison (30) pouvant être raccordé au mécanisme à transmission centrale de la hacheuse (3) et qui comprend un dispositif, qui peut être activé lors du démarrage de la machine (4) pour l'opération de moissonnage, pour déclencher d'une manière décalée dans le temps le mouvement de rotation des deux trains d'arbres (27, 28).

2. Machine selon la revendication 1, **caractérisée en ce que** l'arbre de liaison (30) est relié par l'intermédiaire d'un mécanisme de transmission (32, 33) aux trains d'arbres respectifs (27, 28) pour la transmission du mouvement de rotation de l'arbre de liaison à ces trains d'arbres.

3. Machine selon la revendication 1 ou 2, **caractérisée en ce que** le dispositif servant à déclencher d'une manière décalée dans le temps le mouvement de rotation des deux trains d'arbres (27, 28) comprend un embrayage de commutation (40), qui est inséré dans l'arbre de liaison (30).

4. Machine selon la revendication 3, **caractérisée en ce que** l'embrayage de commutation (40) est formé par un embrayage de commutation réalisant une transmission de force.

5. Machine selon la revendication 4, **caractérisée en ce que** l'embrayage de commutation (40) est associé à l'un (33) des deux mécanismes de transmission (32, 32) pour la transmission du mouvement de rotation au train d'arbres associé (28).

6. Machine selon l'une des revendications 3 à 5, **caractérisée en ce que** l'arbre de liaison (30) est équipé de deux embrayages de démarrage (38, 39), qui sont respectivement associés à l'une des deux mécanismes de transmission (32, 33) et que l'embrayage de commutation (40) peut être couplé pour la transmission de couple à l'un (39) des deux embrayages de démarrage (38, 39) et peut être dégagé de l'engagement avec l'embrayage.

7. Machine selon l'une des revendications 3 à 6, **caractérisée en ce que** l'embrayage de commutation (40) comporte un organe de réglage (42), qui est inséré dans un dispositif de commande électronique (44), pour son engagement dans l'embrayage avec le mécanisme de transmission associé (33) et l'embrayage de démarrage associé (39).

8. Machine selon la revendication 7, **caractérisée en ce que** le dispositif de commande (44) -comprend un capteur de déplacement (46) qui, lors du démarrage de la machine (4) pour l'opération de moissonnage, envoie un signal, indiquant le mouvement de rotation de l'arbre de liaison (30), au dispositif de commande (44) servant à actionner l'organe de réglage (44).

9. Machine selon la revendication 8, **caractérisée en ce que** le dispositif de commande (44) comprend un circuit de temporisation pour déclencher d'une manière retardée le déplacement de réglage de l'organe de réglage (41) une fois qu'est obtenu le signal de déplacement en rotation.

10. Machine selon la revendication 8 ou 9, **caractérisée en ce que** lors de l'arrêt de la machine (4), le capteur de déplacement (46) délivre au dispositif de commande (44) un signal négatif, indiquant l'état d'arrêt de l'arbre de liaison (30), pour supprimer l'enclenchement de l'embrayage de commutation (40) avec le mécanisme de transmission associé (33) et l'embrayage de démarrage associé (39).

11. Machine selon l'une des revendications 1 à 10, caractérisée en-ce que le dispositif d'entraînement est équipé d'un embrayage (47) activé en fonction du sens de rotation, pour un déclenchement simultané du mouvement de rotation des deux trains d'arbres (27, 28) lors du fonctionnement en inverse de la machine (4).

12. Machine selon la revendication 11, **caractérisée en ce que** l'embrayage (47), qui est activé en fonction du sens de rotation conformément au fonctionnement de marche arrière, forme lorsque l'embrayage de commutation (40) est désenclenché, une liaison d'entraînement direct depuis l'arbre de liaison au mécanisme de transmission (33) associé à l'embrayage de commutation (40).

13. Machine selon l'une des revendications 1 à 12, **caractérisée en ce que** les groupes de tambours d'entrée et de fauchage (8-11; 12-15) comportent, en outre, des deux côtés de l'axe médian vertical longitudinal (7) de la machine (4), respectivement au moins un autre tambour de convoyage (21, 22; 23, 24) pour la récolte coupée dans la zone interstitielle, proche de la hacheuse entre des tambours voisins d'entrée et de fauchage (9, 10, 11; 12, 13, 14).

14. Machine selon l'une des revendications 1 à 13, **caractérisée en ce que** les deux groupes de tambours d'entrée et de fauchage (8-11; 12-15), qui sont contiguës au plan médian vertical longitudinal (16) de la machine (4), comprennent en supplément respectivement un tambour de convoyage oblique (25, 26) situé latéralement en avant des cylindres d'introduction (5, 6) de la hacheuse (3).

15. Machine selon l'une des revendications 1 à 14, **caractérisée en ce que** chacun des deux trains d'arbres (27, 28) est en outre subdivisé pour sa part en au moins deux trains individuels et tous les trains individuels peuvent être entraînés successivement avec un intervalle de temps de décalage, par l'intermédiaire de l'arbre de liaison (30) au moyen du dispositif pour réaliser le déclenchement, retardé dans le temps, du mouvement de rotation.
